Europäisches Patentamt

European Patent Office

Office européen des brevets

(11) Veröffentlichungsnummer: **0 398 012**
**A2**

## (12) EUROPÄISCHE PATENTANMELDUNG

(21) Anmeldenummer: 90106565.6

(22) Anmeldetag: 05.04.90

(51) Int. Cl.⁵: **G01B 7/14**

(30) Priorität: 12.05.89 DE 3915630

(43) Veröffentlichungstag der Anmeldung:
22.11.90 Patentblatt 90/47

(84) Benannte Vertragsstaaten:
DE FR GB IT

(71) Anmelder: **ROBERT BOSCH GMBH**
**Postfach 10 60 50**
**D-7000 Stuttgart 10(DE)**

(72) Erfinder: **Mayer, Günter**
**Mittleres Gässle 13**
**D-7141 Murr(DE)**

(54) **Arbeitszylinder mit einem Sensor zur Bestimmung der Position des Kolbens.**

(57) Bei einem pneumatischen oder hydraulischen Arbeitszylinder (10) ist in einem der Zylinderköpfe (11, 12) ein induktiver Sensor (20) angeordnet. Der Kolben (14) weist eine Scheibe (15) aus elektrisch leitendem Material auf, so daß der Abstand s zwischen Kolben (14) und Sensor (20) kontinuierlich bestimmt werden kann. Aufgrund der Bedämpfung der Spule des Sensors (20) ist eine kontinuierliche Messung der Bewegung des Kolbens (14) möglich. Auch können mit Hilfe von Einstellschrauben (22) und einer Auswerteschaltung (21) bestimmte vorgegebene Schwellwerte eingestellt werden. Es ist somit eine besonders einfache und exakte Überwachung der Kolbenposition sowohl an bestimmten Stellen als auch kontinuierlich über den gesamten Arbeitsbereich möglich.

FIG.1

## Arbeitszylinder mit einem Sensor zur Bestimmung der Position des Kolbens

Stand der Technik

Die Erfindung geht aus von einem Arbeitszylinder mit einem Sensor zur Bestimmung der Position des Kolbens nach der Gattung des Anspruchs 1. Bei Arbeitszylindern ist es bereits bekannt, in die das Zylinderrohr abschließenden Deckel als elektrische Schalter ausgebildete Endschalter anzuordnen. Mit Hilfe dieser Endschalter kann aber jeweils nur eine einzige Position, meist die Endposition, das heißt eine Position kurz vor Auftreffen des Kolbens an der Innenseite der Deckel, erfaßt werden. Bei anderen Steuervorrichtungen für Arbeitszylinder sind außerhalb des Zylinderrohrs mehrere in Achsrichtung hintereinander angeordnete magnetfeldempfindliche Elemente, wie zum Beispiel Reed-Schalter oder Hall-Elemente angebracht. Bei diesen Steuervorrichtungen können aber nur bestimmte Positionen abgefragt werden. Ferner ist ein relativ großer Platzbedarf für den zusätzlichen Anbau der magnetfeldempfindlichen Elemente außerhalb des Zylinderrohrs notwendig.

Vorteile der Erfindung

Der erfindungsgemäße Arbeitszylinder mit den kennzeichnenden Merkmalen des Anspruchs 1 hat demgegenüber den Vorteil, daß eine einfache Wegmessung des Kolbens möglich ist. Die Position des Kolbens kann vom Deckel aus über die gesamte Verschiebelänge des Kolbens bestimmt werden. Der Sensor ist geschützt vor Beschädigungen versenkt in dem bzw. in den Deckeln des Zylinderrohrs einbaubar. Mit Hilfe eines einzigen induktiven Elements und einer entsprechenden Auswerteschaltung kann der gesamte Weg des Kolbens detektiert werden. Die Auswerteschaltung ist gleichzeitig auch im Deckel unterbringbar. Ferner ist zugleich auch eine Verwendung als Schalter für eine oder mehrere vorgegebene Positionen möglich. Während bisher für jeden Schalter ein eigenes Anschlußkabel notwendig war, genügt jetzt ein einziges Kabel. Am Kolben oder an der Zylinderwand sind keine die Bewegung des Kolbens übertragenden Teile notwendig, wodurch die Baugröße vermindert wird. Es ist kein Abklappen eines Schalters, wie z. B. bei Reed-Schaltern, durch Fremdeinflüsse möglich. Dadurch sind Fehlmessungen und Fehlschaltungen weitgehend ausgeschlossen. Mit Hilfe von außen bedienbaren Einstellschrauben kann der Sensor und die Auswerteschaltung auf die gewünschte Position eingestellt werden. Diese Einstellschrauben können z. B. mit einem Deckel mit Schnappverschluß abgedeckt werden.

Durch die in den Unteransprüchen aufgeführten Maßnahmen sind vorteilhafte Weiterbildungen des im Anspruch 1 angegebenen Arbeitszylinders möglich.

Zeichnung

Ein Ausführungsbeispiel der Erfindung ist in der Zeichnung dargestellt und in der nachfolgenden Beschreibung näher erläutert. Es zeigen die Figur 1 einen Arbeitszylinder mit einem Sensor, Figur 2 eine Draufsicht auf einen Arbeitszylinder und Figur 3 ein Meßdiagramm, das den Verlauf des Ausgangssignals über den Abstand zwischen dem Sensor und dem Kolben darstellt.

Beschreibung des Ausführungsbeispiels

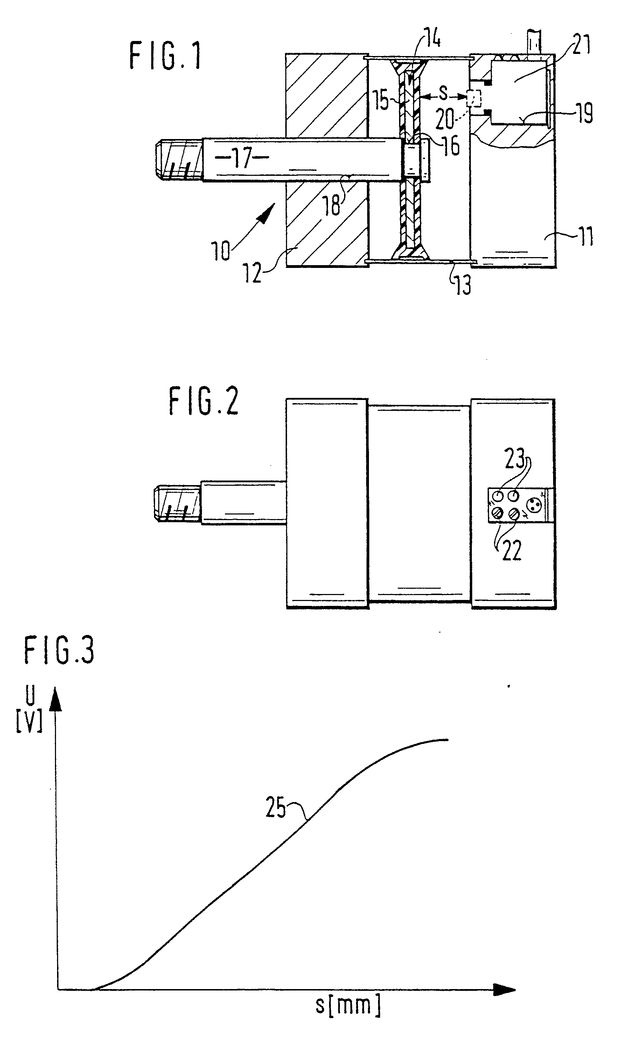

In der Figur 1 ist mit 10 ein pneumatischer oder hydraulischer Arbeitszylinder bezeichnet, der aus einem auf beiden Seiten durch Zylinderköpfe 11, 12 abgeschlossenen, aus unmagnetischem Material hergestellten Zylinderrohr 13 besteht. Im Zylinderrohr 13 ist ein Kolben 14 gleitend geführt, der eine Metallscheibe 15 aufweist. Der Kolben 14 sitzt in einer Ringnut 16 auf einer Kolbenstange 17 auf. Die Kolbenstange 17 ist in einer mittig in einem der Zylinderköpfe 12 ausgebildeten Bohrung 18 geführt. Im anderen Zylinderkopf 11 sind in einer Ausnehmung 19 ein induktiver Sensor 20 und eine elektrische Schaltung 21 angeordnet. In Figur 2 sind die Einstellschrauben 22 der elektrischen Schaltung 21 dargestellt, mit deren Hilfe bestimmte Schaltschwellen eingestellt werden können. Ferner sind an der Oberfläche des Zylinderkopfs 11 Leuchtdioden 23 angebracht, die das Erreichen der eingestellten Schaltzustände anzeigen. Der Sensor 20 besteht im Prinzip aus einer stromdurchflossenen Spule. Durch die aktive Sensorfläche, das heißt durch die dem Kolben 14 zugewandte Stirnseite des Sensors 20, treten magnetische Wechselfelder aus. Dadurch werden in der Metallscheibe 15, das heißt in einem Teil aus elektrisch leitendem Material des Kolbens, Wirbelströme induziert. Dieser Energieverlust vermindert die Güte (die Impedanz) der Spule im induktiven Sensor 20. Die Bedämpfung der Spule wird dabei mit abnehmendem Abstand zwischen dem Sensor 20 und der Metallscheibe 15 immer stärker. In der Figur 3 ist ein Diagramm dargestellt, das die Ausgangsspannung $U$ des Sensors 20 über dem Abstand $s$ zwischen Kolben 14 und Sensor 20 zeigt.

Statt der Ausgangsspannung U könnte auch der Ausgangsstrom I aufgetragen werden. Es ist ersichtlich, daß die Kurve 25 einen linearen Mittelbereich aufweist, der zur Meßwertbestimmung herangezogen werden kann. Die nichtlinearen Anfangs- und Endbereiche der Kurve 25 sollen nicht mit ausgewertet werden. Hierzu wird mit Hilfe der Schrauben der zu messende lineare Bereich der Kurve 25 eingestellt. Ferner ist bei der Auswahl des Arbeitsbereichs der Kurve 25, das heißt des linearen Bereichs, darauf zu achten, daß die Ausdehnung des Magnetfeldes mit wachsendem Spulendurchmesser zunimmt. Je größer deshalb der Durchmesser des Sensors ist, desto größer ist der realisierbare und meßbare Abstand s zwischen dem Sensor 20 und dem Kolben 14. Ferner ist bei der Auswahl des elektrisch leitenden Bereichs 15 des Kolbens 14 zu beachten, daß je größer die magnetische Leitfähigkeit dieses Bereichs ist, desto größer ist die Bedämpfung der Spule.

Mit Hilfe z. B. eines einzigen Sensors 20 ist es möglich, den gesamten Bewegungsbereich des Kolbens 14 zu erfassen. Auch können mit Hilfe der Einstellschrauben 22 bestimmte Werte im Arbeitsbereich eingestellt werden, bei deren Erreichen z. B. die Leuchtdioden 23 aufleuchten. Dadurch ist sowohl eine kontinuierliche als auch eine Auslösung einer Vorrichtung bei bestimmten vorgegebenen Arbeitspunkten möglich.

**Ansprüche**

1. Arbeitszylinder (10) mit mindestens einem in einem Zylinderdekkel (11, 12) angeordneten Sensor (20) zur Bestimmung der Position des in einem Zylinderrohr (13) bewegten Kolbens (14), dadurch gekennzeichnet, daß der Sensor (20) ein induktiver Analoggeber ist, der die Bewegung des Kolbens (14) nahezu über die gesamte Länge des Zylinderrohrs (13) erfaßt, und daß das analoge Meßsignal (U bzw. I) des Sensors (20) in einer dem jeweiligen Sensor (20) zugeordneten elektrischen Auswerteeinrichtung (21) ausgewertet wird.

2. Arbeitszylinder nach Anspruch 1, dadurch gekennzeichnet, daß die Auswerteschaltung (21) im Zylinderdeckel (11, 12) des Zylinderrohrs (13) angeordnet ist.

3. Arbeitszylinder nach Anspruch 1 und/oder 2, dadurch gekennzeichnet, daß in der Auswerteschaltung (21) mehrere Schaltstufen einstellbar sind, bei deren Erreichen ein Schaltsignal abgegeben wird.

4. Arbeitszylinder nach Anspruch 3, dadurch gekennzeichnet, daß die Schaltstufen mit Hilfe von in den Zylinderdeckeln (11, 12) angeordneten Einstellschrauben (23) einstellbar sind.

5. Arbeitszylinder nach einem der Ansprüche 1 bis 4, dadurch gekennzeichnet, daß in jedem der Zylinderdeckel (11, 12) mindestens ein Sensor (20) angeordnet ist.

FIG.1

14

15

S

20

16

21

19

17

18

10

12

13

11

FIG.2

23

22

FIG.3

U
[V]

25

s[mm]